# EUROPEAN PATENT APPLICATION

(11) **EP 1 764 341 A2**
(43) Date of publication of application: **21.03.2007**
(21) Application number: 06118284.6
(22) Date of filing: 02.08.2006
(51) Int. Cl.: B66F 9/075, B62B 3/06, B60K 7/00, B60K 17/04

(54) **Reduction unit for connecting an electric motor to the driving wheel of a lift truck**

(30) Priority: 14.09.2005 IT PD20050264
(71) Applicant: M.G. Mini gears s.p.a., 35127 Padova (IT)
(72) Inventor: De Stefani, Vincenzo, 35100 Padova (IT); Zingale, Pierluigi, 30030 Martellago (VE) (IT); Cognolato, Alessandro, 35020 S. Angelo Di Piove (PD) (IT)
(74) Representative: Modiano, Micaela Nadia

(57) **Abstract**

A reduction unit for the connection of an electric motor to the driving wheel of a lift truck, of the type that comprises a frame (15) for containing the reduction gears which is pivoted, about a vertical axis, to a bracket (16) for monolithic fixing to the chassis (17) of the lift truck (14), and means (19) for the mechanical connection of the reduction unit (10) to the steering and control element (20) of the lift truck (14), the reduction unit comprising means for fixing the electric motor (11) rigidly to the bracket (16) with a vertical orientation of the rotation axis of the electric motor (11). The means (19) for the mechanical connection of the reduction unit (10) to the steering and control element (20) of the lift truck (14) are fixed with respect to the frame (15).

## Description

The present invention relates to a reduction unit for connecting an electric motor to the driving wheel of a lift truck.

The invention is useful particularly but not exclusively in the motor drive of lift trucks of the so-called transpallet type.

The expression "transpallet lift truck" designates lift trucks used mainly to move pallets inside mass-market distribution warehouses and in industry.

The important characteristics of lift trucks of the transpallet type include maneuverability and quietness.

These trucks must in fact ensure the storage of goods in narrow spaces and must be usable substantially inside buildings without causing noise in the environment.

Quietness is determined by the use of an electric motor powered by a battery, whereas maneuverability arises from the particular structure.

Generally, a lift truck of the transpallet type or the like is constituted by a front part, which forms the forks, supported on the ground by wheels, on which the load rests; by a central part, on which the electric battery and the optional hydraulic system for lifting such forks are provided; and by a rear part, on which the truck propulsion device is provided.

Known propulsion devices comprise an electric motor, the shaft of which is connected, by means of a pinion, to the input of a multistage reduction unit; the output of the reduction unit is connected to the driving and steering wheel of the truck.

For these trucks, the background art uses three types of motor drive: with an electric motor having a vertical axis and a reduction unit of the angular type; with an electric motor having a horizontal axis and a reduction unit of the parallel type; and with a motor having a horizontal axis integrated in the wheel hub and a reduction unit of the planetary type.

Among the indicated types, the first one is the one used in the production of higher-value, higher-performance lift trucks, while the latter is the type for lower-performance trucks.

In all cases, the frame of the reduction unit with the driving wheel is pivoted about a vertical axis to the chassis of the truck by means of a bracket, while the electric motor is rigidly coupled to the reduction unit.

In the case of an electric motor with a vertical rotation axis, said motor is arranged above the bracket, while the reduction unit and the driving wheel are arranged below it.

In this case, the rotation axis of the electric motor is perpendicular to the rotation axis of the driving wheel and intersects it substantially at the central region of said wheel.

The steering and control element of the truck can consist of a steering bar or of a steering handwheel, depending on the use of the lift truck.

In the first case, the steering bar is hinged physically to the assembly constituted by the motor and the reduction unit.

The type of lift truck known as "walk-behind", in which the operator walks behind the truck or stands on a platform that is fixed to said truck, uses a steering bar provided with connection means directly on the outer casing of the electric motor (typically on its top) if the motor is arranged so that its axis of rotation is vertical, and instead has connection means directly on the frame of the reduction unit when the motor has a horizontal rotation axis and therefore is in a lower position with respect to the first case.

These means for connecting the steering bar to the electric motor or to the reduction unit are mechanical and are constituted typically by a hinge.

The controls for the electric motor and for the hydraulic system are provided on the handlebar of the steering bar; when the bar is in the vertical position, the electric motor is switched off.

Motor drives provided with reduction units associated with motors having a vertical axis of rotation allow a greater reduction of their dimensions, since the motor rotation axis typically coincides with the axis for the pivoting of the reduction unit to the bracket for connection to the truck chassis and the rotation axis of the motor intersects the rotation axis of the driving wheel in an intermediate region thereof: this leads to a reduction of the volumes located eccentrically with respect to the steering axis and to a consequent reduced space occupation of the chassis.

In the case of a motor with a horizontal axis of rotation said motor is instead arranged laterally to the reduction unit and in practice is rigidly coupled to its frame, in a position that lies below the portion for pivoting to the bracket.

It is evident that the rotary bulk about the steering axis is more conspicuous than in the preceding case, since there is a greater eccentricity of the volumes with respect to the steering axis.

On the other hand, in the case of motor drives with motors having a vertical axis of rotation, the steering bar is pivoted in a higher position with respect to the case of a motor drive with a motor having a horizontal axis, with evident disadvantages in terms of steering ergonomics.

In both of the described situations, it should be noted that the fact that the electric motor rotates together with the reduction unit causes the wiring of the electric motor to rotate as well, with problems of wear thereof over time; this is particularly felt in the case of the use of a motor with a horizontal axis.

Another problem linked to the case of motor drives with motors having a horizontal rotation axis arises from the fact that the motor is installed in a seat of the frame of the reduction unit that constrains heavily the use of motors having different outside diameters: in practice, the possibility to provide the motor drives with motors having a different outside diameter (the power of the motor being linked to its size) is limited and in practice also limits the range of lift truck types to which the structure of the reduction unit can be applied without making substantial modifications to the frame thereof.

The aim of the present invention is to provide a reduction unit for the connection of an electric motor to the driving wheel of a lift truck that solves the drawbacks noted in conventional types.

Within this aim, an object of the present invention is to provide a reduction unit for the connection of an electric motor to the driving wheel of a lift truck that allows to use a truck control and steering element that is ergonomic.

Another object of the present invention is to provide a reduction unit for the connection of an electric motor to the driving wheel of a lift truck that allows to reduce the overall volume of the structure of the lift truck with which it is associated.

Another object of the present invention is to provide a reduction unit for the connection of an electric motor to the driving wheel of a lift truck that allows to avoid wear of the wiring of the electric motor.

Another object of the present invention is to provide a reduction unit for the connection of an electric motor to the driving wheel of a lift truck that allows the association of different electric motors so that it can be used on a wide range of lift trucks.

A further object of the present invention is to provide a reduction unit for the connection of an electric motor to the driving wheel of a lift truck that can be manufactured with known systems and technologies.

This aim and these and other objects, which will become better apparent hereinafter, are achieved by a reduction unit for the connection of an electric motor to the driving wheel of a lift truck, of the type that comprises a frame for containing the reduction gears which is pivoted, about a vertical axis, to a bracket for fixing to the chassis of the lift truck, and means for the mechanical connection of said reduction unit to the steering and control element of said lift truck, characterized in that it comprises means for fixing the electric motor rigidly to said bracket with a vertical orientation of the rotation axis of the electric motor, said means for the mechanical connection of said reduction unit to the steering and control element of the lift truck being fixed with respect to said frame.

Further characteristics and advantages of the invention will become better apparent from the following detailed description of a preferred but not exclusive embodiment thereof, illustrated by way of non-limiting example in the accompanying drawings, wherein:

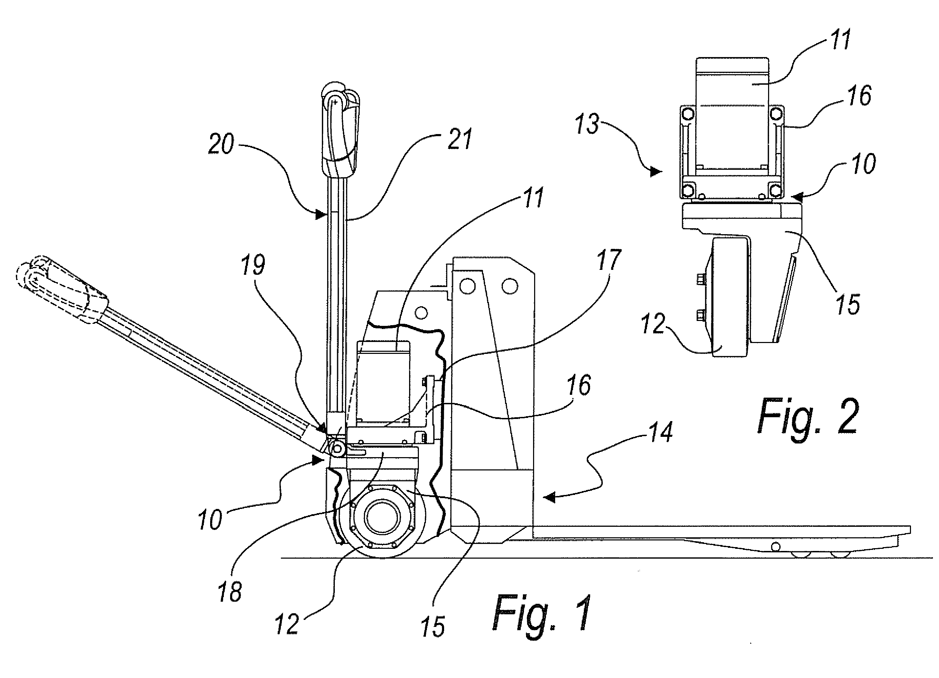

Figure 1 is a side view of a lift truck of the walk-behind type, in which there is a reduction unit according to the invention;
Figure 2 is a front view of the reduction unit of Figure 1, with an electric motor and the driving wheel of the truck connected thereto.

It is noted that anything found to be already known during the patenting process is understood not to be claimed and to be the subject of a disclaimer.

With reference to the figures, a reduction unit for the connection of an electric motor to the driving wheel of a lift truck according to the invention is generally designated by the reference numeral 10.

A propulsion device, composed of the reduction unit 10, which is connected in input to an electric motor 11 and in output to a driving wheel 12, is generally designated by the reference numeral 13, while a lift truck, in this embodiment of the walk-behind type, on which said motor drive is installed, is generally designated by the reference numeral 14.

The reduction unit 10 comprises a frame 15 for containing the reduction gears (not shown in the figures), which is pivoted, about a vertical axis, to a bracket 16 for fixing to a chassis 17 of the lift truck 14.

The bracket 16 has, for example, an L-shaped lateral contour, formed by a vertical plate and a horizontal plate; the vertical plate is fixed to the chassis 17 for example by means of bolts.

A bearing 18 is interposed below the horizontal plate of the bracket 16, interposed between the bracket 16 and the upper part of the frame 15 of the reduction unit 10.

Below the bearing 18, on the frame 15, there are means 19 for the mechanical connection of the reduction unit 10 to a steering and control element 20 of the lift truck 14; the steering and control element 20, in this embodiment, is constituted by a steering bar 21, while the mechanical connection means 19 are constituted by a hinge having a horizontal axis, which connects the end of the steering bar to the frame 15.

Above the bracket 16 there are means for fixing the electric motor 11 (not shown in the figures, but constituted for example by a flange which is monolithic with the frame of the motor) rigidly to the bracket 16 with a vertical orientation of the rotation axis of the electric motor.

The electric motor 11 is thus fixed with respect to the chassis 17; in particular, the fixing position of the electric motor 11 is such that the rotation axis of said electric motor passes through the space that can be occupied by the driving wheel 12 of the truck 14 so as to intersect the rotation axis of the driving wheel 12.

It should be noted that the means 19 for the mechanical connection of the reduction unit 10 to the steering and control element 20 are arranged below the fixing position of the electric motor 11, and therefore in a position which is close to the driving wheel 12, to the full advantage of the ergonomics of the steering bar 21.

In practice it has been found that the invention thus described solves the problems noted in known types of reduction unit for the connection of an electric motor to the driving wheel of a lift truck.

The low position of the coupling of the steering bar in fact ensures an ergonomic operating position for people of all body sizes.

Further, the low position of the coupling of the steering bar does not interfere with the design of the lift truck, since it lies below the usual viewing field of an upright person.

The electric motor with a vertical rotation axis ensures that the space occupation during steering is minimized, so that the lift truck is more compact and easier to handle.

The use of the electric motor having a vertical axis fixed to the chassis ensures that the power supply and control cables of the motor are not subject to cyclic movements during steering and therefore to early wear or breakage.

The reduction unit can be equipped with motors of different lengths and outside diameters without modifications to the frame of said unit; this ensures the use of the frame of the reduction unit for a wide range of applications to transpallet lift trucks of the walk-behind or platform type.

It is evident that the invention can be applied conveniently also to other types of lift truck fitted with an electric motor.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000264 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A reduction unit for the connection of an electric motor to the driving wheel of a lift truck, of the type that comprises a frame (15) for containing the reduction gears which is pivoted, about a vertical axis, to a bracket (16) for monolithic fixing to the chassis (17) of the lift truck (14), and means (19) for the mechanical connection of said reduction unit (10) to the steering and control element (20) of said lift truck (14), **characterized in that** it comprises means for fixing the electric motor (11) rigidly to said bracket (16) with a vertical orientation of the rotation axis of the electric motor (11), said means (19) for the mechanical connection of said reduction unit (10) to the steering and control element (20) of the lift truck (14) being fixed with respect to said frame (15).

2. The reduction unit according to claim 1, **characterized in that** said frame (15) is pivoted below said bracket (16), while said means for fixing the electric motor (11) are adapted to arrange the electric motor (11) above said bracket (16).

3. The reduction unit according to one of the preceding claims, **characterized in that** said means (19) for the mechanical connection of said reduction unit (10) to the steering and control element (20) of the lift truck (14) are arranged below the fixing position of the electric motor (11).

4. The reduction unit according to one of the preceding claims, **characterized in that** said means (19) for the mechanical connection of said reduction unit (10) to the steering and control element (20) of the lift truck (14) comprise a hinge for the articulation of a steering bar (21).

5. The reduction unit according to claim 4, **characterized in that** it comprises a bearing (18), which is interposed between said bracket (16) and said upper part of said frame (15), said hinge for the articulation of the steering bar (21) of the lift truck (14) being fixed below said bearing (18).

6. The reduction unit according to claim 5, **characterized in that** the fixing position of the electric motor (11) is such that the rotation axis of said electric motor (11) passes through the space that can be occupied by the driving wheel (12) of the truck (14), so as to intersect the rotation axis of said driving wheel (12).

7. A motor drive (13) for a lift truck, **characterized in that** it comprises an electric motor (11) with a vertical rotation axis which is rigidly fixed to the bracket (16) of a reduction unit (10) according to one or more of the preceding claims.
